**Europäisches Patentamt**

**European Patent Office**

**Office européen des brevets**

(19)

(11) Veröffentlichungsnummer : **0 379 481 B1**

(12) # EUROPÄISCHE PATENTSCHRIFT

(45) Veröffentlichungstag der Patentschrift :
11.09.91 Patentblatt 91/37

(51) Int. Cl.⁵ : **B65G 47/14**

(21) Anmeldenummer : 88902809.8

(22) Anmeldetag : 02.04.88

(86) Internationale Anmeldenummer :
PCT/DE88/00216

(87) Internationale Veröffentlichungsnummer :
WO 88/07967 20.10.88 Gazette 88/23

(54) VORRICHTUNG UND VERFAHREN ZUM VEREINZELN VON RELATIV KLEINVOLUMIGEN SCHÜTTGÜTERN.

(30) Priorität : 08.04.87 DE 3711827
08.04.87 DE 8705219 U

(43) Veröffentlichungstag der Anmeldung :
01.08.90 Patentblatt 90/31

(45) Bekanntmachung des Hinweises auf die
Patenterteilung :
11.09.91 Patentblatt 91/37

(84) Benannte Vertragsstaaten :
AT BE CH DE FR GB IT LI LU NL SE

(56) Entgegenhaltungen :
DE-A- 1 481 109

(56) Entgegenhaltungen :
DE-A- 3 321 463
DE-C- 893 028
US-A- 2 456 031
US-A- 3 767 029

(73) Patentinhaber : Krämer, Norbert
Röntgenstrasse 68
W-6100 Darmstadt 12 (DE)

(72) Erfinder : Krämer, Norbert
Röntgenstrasse 68
W-6100 Darmstadt 12 (DE)

(74) Vertreter : Mierswa, Klaus, Dipl.-Ing.
Friedrichstrasse 171
W-6800 Mannheim 24 (DE)

## Beschreibung

### Technisches Gebiet :

Die Erfindung betrifft eine Rinne, die an ihrem oberen Ende um eine Achse und gemäß einer schiefen Ebene abwärts geneigt mit ihrer Fallkante hin- und herbewegbar gehaltert ist und ein Verfahren zum Vereinzeln von Schüttgütern.

### Stand der Technik :

Zum Vereinzeln von relativ kleinvolumigen Schüttgütern ist es bekannt, das Schüttgut in Schüttelrinnen aufzugeben, die gemäß einer schiefen Ebene geneigt sind und die Hin- und Herbewegungen auszuführen imstande sind. Die Bewegungen der Schüttelrinne können mit relativ großer Frequenz und kleiner Amplitude erfolgen, wobei die Rinnen zur Vereinzelung lang sein müssen. Um beispielsweise in der Verpackungsindustrie geschüttete Tabletten zu vereinzeln, werden Rinnen verwendet, die mindestens einen Meter oder länger sind.

Durch die DE-A-3321463 ist eine Rinne zum Vereinzeln von Schüttgütern bekannt geworden, die gemäß einer schiefen Ebene geneigt und an ihrem oberen Ende schwenkbar gehaltert ist und mittels eines Pneumatikzylinders als Schwingungserreger auf und ab bewegt werden kann. Die Schwingungsbewegung der Rinne erfolgt im wesentlichen senkrecht zur Förderrichtung des Schüttgutes.

Der Nachteil derartiger Rinnen besteht darin, daß diese lang sein müssen, um eine ausreichende Vereinzelung zu erzielen. Dadurch sind derartige Maschinen sehr raumintensiv. Des weiteren sind Zerstörungen des Schüttgutes, wie Abplatzungen oder Staubbildung oder dergleichen, aufgrund der hohen Anzahl der Bewegungen der Rinne relativ häufig, weshalb am Ende der Vereinzelungsstrecke die vereinzelten Gegenstände vom Bruchgut getrennt werden müssen.

Durch die US-A-2456031 ist eine Fördervorrichtung zum Ausrichten, Separieren und Fördern von eßbaren Gebrauchsgütern bekannt geworden, bestehend aus einem beweglichen Rahmen von parallel angeordneten Führungsgliedern, die einen Rost bilden, dessen hinterer Teil gemäß einer schiefen Ebene geneigt ist und der in einen waagrechten, horizontal hin- und herschwenkbaren Teil übergeht. Unter den Führungsgliedern zum Aufliegen der Güter verläuft ein Treibriemen, der von einem Motor angetrieben wird, der sich unterhalb der schiefen Ebene der Fördervorrichtung befindet. Zum Vereinzeln von Tabletten, Pillen, Zäpfchen oder Körnern ist diese Fördervorrichtung nicht geeignet.

### Technische Aufgabe :

Der Erfindung liegt die Aufgabe zugrunde, eine Rinne und ein Verfahren zum Vereinzeln von Schüttgütern, wie Tabletten, Pillen, Zäpfchen oder Körnern, zu schaffen, die auf einer kurzen Wegstrecke eine Vereinzelung der einzelnen Gegenstände erreicht ; die Anzahl der Bewegungen zur Vereinzelung der Gegenstände soll reduziert und die Vereinzelungsstrecke in ihrer Längenausdehnung gegenüber bekannten Vereinzelungsrinnen erheblich verkürzt sein ; ebenso soll praktisch kein Bruch des Schüttgutes mehr entstehen.

### Darstellung der Erfindung :

Die Lösung dieser Aufgabe besteht erfindungsgemäß in den Merkmalen des Anspruchs 1. Weitere Ausführungen der erfindungsgemäßen Rinne sind in den Unteransprüchen 2 bis 7 gekennzeichnet. Ein Verfahren zum Vereinzeln von Schüttgütern ist in Anspruch 8 gekennzeichnet.

Die erfindungsgemäße Rinne und das Verfahren zum Vereinzeln von Schüttgütern besitzen eine Reihe erheblicher Vorteile. Die Rinne wird um ihre Längsachse hin- und hergedreht, so daß die Fallkante der Rinne hin- und herbewegt wird, wobei die Amplitude der Rinne örtlich gleich ist. Dadurch rutschen die einzelnen Gegenstände des Schüttgutes quer zur Längsrichtung der Rinne hin und her, so daß diese Hin- und Herbewegungen der einzelnen Gegenstände den Vereinzelungsweg, bezogen auf die Länge der Rinne, um ein Vielfaches verlängert.

Höchst vorteilhaft ist es des weiteren, wenn das Schüttgut bei jeder Hin- und Herdrehung angehoben wird. Auf diese Weise erhalten die einzelnen Gegenstände des Schüttgutes neben ihrer kinetischen Energie eine potentielle Energie, die beim Umwandeln wieder in kinetische Energie den einzelnen Gegenstand dazu befähigt, die seitlich von ihm, oberhalb wie unterhalb und vor ihm liegenden Gegenstände zur Seite zu pressen, wodurch der Vereinzelungsvorgang erheblich beschleunigt und verbessert wird. Dieses Anheben des Schüttgutes bei jeder Hin- und Herbewegung wird am einfachsten dadurch erreicht, daß die Rinne als Hohlzylinder oder oval mit seitlich gekrümmten Seitenwänden ausgebildet ist. Denn dann laufen die einzelnen Gegenstände des Schüttgutes bei jeder Hin- und Herbewegung der Rinne quasi die Seitenwandungen hinauf, wobei beim Herabrutschen der Gegenstände beim Einsatz der entgegengesetzten Bewegung der Rinne nunmehr der einzelne Gegenstand die oberhalb, unterhalb und neben sich liegenden Gegenstände wegzudrücken imstande ist.

Die erfindungsgemäße Rinne besitzt dadurch den hervorstechenden Vorteil, daß dieselbe nur noch einen Bruchteil der Länge aufweist wie vergleichbare Rinnen des Standes der Technik, weshalb die erfindungsgemäße Rinne platz-, raum- und kostensparend ist.

Des weiteren ist eine höchst einfache Gestaltung der erfindungsgemäßen Rinne möglich, da dieselbe um die Längsachse als Drehachse hin- und herdreht. Die schnellste Vereinzelung der einzelnen Gegenstände wird dann erreicht, wenn der Querschnitt der Rinne oval mit gekrümmten Seitenwänden oder kreisförmig mit zylindrischer Mantelwandung ist. Auf diese Weise kann die Länge der Rinne gegenüber vergleichbaren Rinnen des Standes der Technik um drei Viertel bis vier Fünftel und mehr verkürzt werden.

Ein weiterer Vorteil der erfindungsgemäßen Rinne besteht darin, daß aufgrund der zur Vereinzelung notwendigen Hin- und Herbewegungen der Rinne praktisch kein Bruch des Schüttgutes mehr auftritt und deshalb kein Ausschuß mehr vorhanden ist.

Ein weiterer Vorteil der erfindungsgemäßen Rinne besteht darin, daß schnell ein Produktwechsel vorgenommen werden kann. Dafür wird die Rinne einfach um 180 Grad gedreht, so daß sämtliche noch in ihr verbliebenden Gegenstände durch die im oberen Bereich befindliche Aussparung der Rinne herausfallen, so daß die Rinne frei ist zur Aufnahme des neuen Schüttgutes.

Die Vereinzelung des einzelnen Gegenstandes und der Fall desselben über die Fallkante der Rinne, beispielsweise herunter auf ein Förderband, wird in bekannter Weise durch eine Registriereinrichtung festgestellt.

Kurzbeschreibung der Zeichnung :

Beispiele der Erfindung sind in der Zeichnung dargestellt und anschließend beschrieben. Dabei zeigen :

Figur 1    eine prinzipielle Darstellung einer Rinne, die eine Drehbewegung um ihre Längsachse auszuführen imstande ist,

Figur 2    eine prinzipielle Ausgestaltung der Rinne, bei der der untere Durchmesser größer ist als der obere Durchmesser,

Figur 3    die Darstellung der Bewegung eines einzelnen Gegenstandes innerhalb der Rinne bei Drehung derselben um ihre Längsachse als Drehachse,

Figur 4    eine vergrößerte Darstellung des Bereichs A in Figur 4

Figur 5    einen Längsschnitt durch eine technische Ausführung einer Rinne, deren Längsachse als Drehachse ausgebildet ist,

Figur 6    eine Draufsicht auf Figur 5 und

Figur 7    eine Ansicht von vorn auf Figur 5.

Bevorzugte Ausführung der Erfindung :

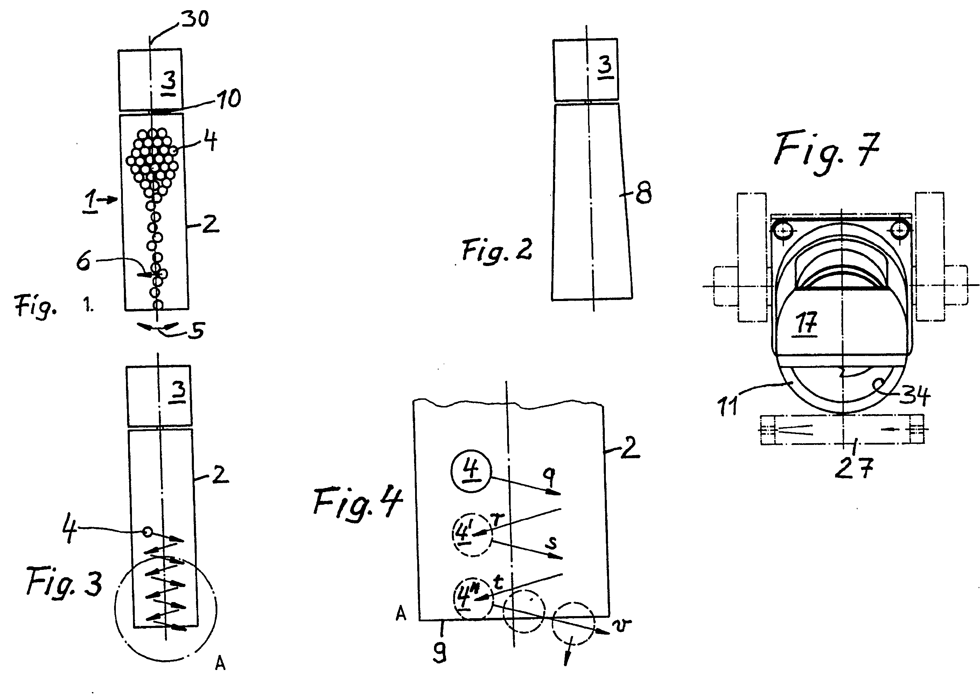

Figur 1 zeigt eine prinzipielle Ausgestaltung einer Vereinzelungsvorrichtung 1, bestehend aus einer Rinne 2 und einem Motor 3, wobei die Rinne mittels einer Drehachse 10 an dem Motor 3 befestigt ist.

Der Motor 3 kann die Rinne 2 um eine Drehachse 10 drehen, die mit der Längsachse 30 der Rinne 2 zusammenfällt. Die hin- und hergehende Drehbewegung der Rinne 2 ist durch den gekrümmten Bewegungsdoppelpfeil 5 dargestellt. Innerhalb der Rinne 2 befindet sich Schüttgut 4, bestehend aus einzelnen Gegenständen, das vereinzelt werden soll. Prinzipiell ist dazu die Rinne 2 — auch in allen übrigen Beispielen — gemäß einer schiefen Ebene etwas geneigt angeordnet, so daß die untere Fallkante der Rinne tiefer liegt als das obere Ende der Rinne, in die das Schüttgut 4 aufgegeben ist.

Beim Stillstand der Rinne sind die Reibungskräfte des Schüttgutes bzw. der einzelnen Gegenstände auf dem Boden der Rinne größer als die durch die Neigung der Rinne aufgeprägte potentielle Energie der Einzelnen Gegenstände 4, so daß diese in Ruhe bleiben und nicht zum unteren Ende der Rinne selbsttätig nur aufgrund der Schwerkraft hinunterrutschen. Wird nun die Rinne 2 um ihre Drehachse 30 gemäß dem gekrümmten Bewegungsdoppelpfeil 5 hin- und hergedreht, so rutschen die einzelnen Gegenstände in den Figuren 3 und 4 zum einen die schiefe Ebene aufgrund der Schwerkraft abwärts, zum anderen wird dieser Abwärtsbewegung eine seitliche Bewegung überlagert, die jeweils hin und zurück verläuft, was in Figur 4 durch die Vektoren q, r, s, t und v angedeutet ist. Bei der Hinbewegung bewegt sich beispielsweise der einzelne Gegenstand 4 längs dem Vektor q, bei der Zurückbewegung längs des Vektors r, so daß der einzelne Gegenstand 4 nach der ersten Hin- und Herbewegung die Position 4', nach der zweiten Hin- und Herbewegung die Position 4" einnimmt, wobei

3

der Gegenstand von der Position 4 zur Position 4' und von der Position 4' zur Position 4" um jeweils eine kleine Wegstrecke der schiefen Ebene abwärts gerutscht ist. Die Vektoren q, r, s t und v bilden somit eine mäanderförmige Strecke mit ständiger Richtungsumkehr, was ebenfalls in den Figuren 3 und 4 gezeigt ist. Bei jeder Hin- und Herbewegung wird somit auf den einzelnen Gegenstand 4 eine Kraft ausgeübt, die in Figur 1 mittels des Richtungspfeiles 6 gekennzeichnet und die quer zur Richtung der schiefen Ebene gerichtet ist. Wenn sich bei der Abwärtsbewegung der Gegenstände an einen einzelnen Gegenstand seitlich weitere angelagert haben, so stoßen die Gegenstände bei jeder Hin- und Herbewegung aneinander mit dem Ergebnis, sich gegenseitig zu verdrängen und somit zu vereinzeln, wie es in Figur 1 dargestellt ist, wobei die Gegenstände schließlich die schiefe Ebene herabrutschen. Dieser Vorgang wird höchst wirkungsvoll unterstützt und verbessert, wenn die Rinne einen gekrümmten Querschnitt aufweist, beispielsweise als zylindrisches Rohr gestaltet ist. Denn dann bewegen sich die einzelnen Gegenstände bei jeder Hin- und Herbewegung der Rinne um ihre Längsachse als Drehachse quasi die Wandung hinauf und erhalten somit zusätzlich zu ihrer kinetischen Energie eine potentielle, die bei der Umkehrung der Bewegung der Rinne wiederum in kinetische Energie zurückverwandelt wird. Diejenigen Teilchen, die seitlich die größte potentielle Energiezufuhr erfahren haben, besitzen nunmehr auch größere kinetische Energie, um wirkungsvoll seitlich angelagerte Gegenstände wegzudrücken und wegzudrängeln, um dergestalt den Vereinzelungsvorgang höchst wirkungsvoll zu beschleunigen. Aufgrund der gekrümmten Wandung der Rinne — egal ob diese zylindrisch oder oval gekrümmt ist — erhalten verschieden weit von der Mittellinie der Rinne entfernt liegende Gegenstände auch verschiedene potentielle Energien aufgeprägt, so daß beim Umwandeln dieser potentiellen Energie in kinetische Energie die Gegenstände beim Herabrutschen der Seitenwände unterschiedliche Beschleunigungen und Geschwindigkeiten erfahren, weshalb sich der Gegenstand mit der höchsten kinetischen Energie in den Strom oder die Zeile von Gegenständen längs der Mittellinie der Rinne drängeln kann und dabei die benachbarten Gegenstände zur Seite schiebt, was zu einer schnellen und höchst wirkungsvollen Vereinzelung der Gegenstände bei kurzer Vereinzelungsstrecke führt.

Insbesondere die Krümmung der Rinne bewirkt eine Verkürzung der Vereinzelungsstrecke für den einzelnen Gegenstand, weil aufgrund der zusätzlichen Aufprägung von unterschiedlicher potentieller Energie auf jeden Gegenstand dieselben unterschiedlich stark in ihren Bewegungsrichtungen quer zur Längsrichtung der Rinne beschleunigt und bewegt werden können.

In Figur 2 ist eine Rinne 8 gezeigt, deren Querschnitt im Bereich der unteren Fallkante vergrößert ist. Dadurch werden weitere spezifische Ausprägungen der Bewegungsabläufe erzielt, beispielsweise werden die einzelnen Gegenstände weiter auseinandergezogen gegenüber der Ausführung der Rinne gemäß der Figur 1.

Bevorzugte Ausführung der Erfindung :

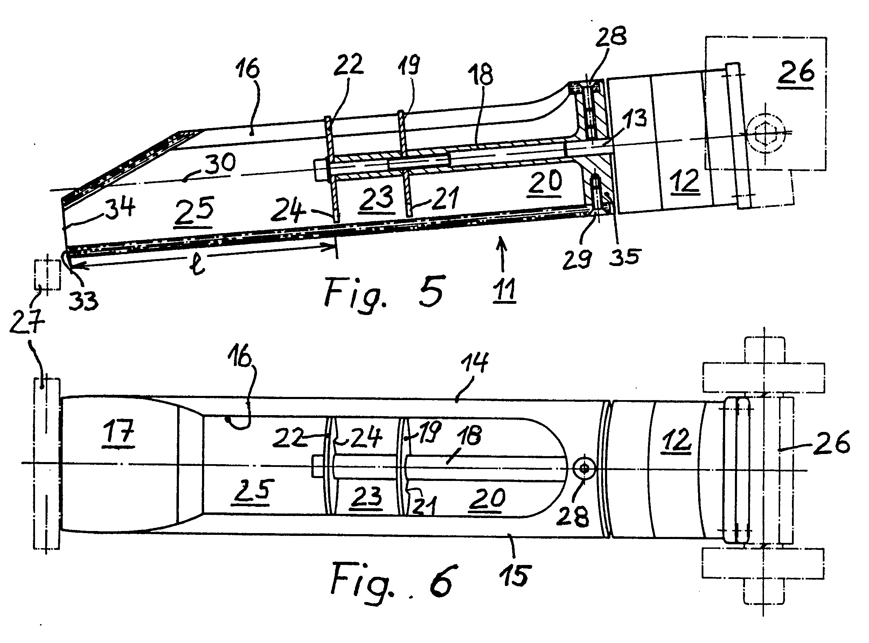

In den Figuren 5 bis 7 ist eine bevorzugte technische Ausführung einer Rinne 11 dargestellt, die um ihre Längsachse 30 als Drehachse drehbar ist.

Die Vereinzelungsvorrichtung der Figuren 5 bis 7 besteht aus einer Rinne 11, die vorzugsweise ein zylindrisches Rohr ist, wobei der Zylindermantel in seinem oberen Bereich eine längliche Aussparung 16 besitzt, so daß der Zylindermantel in zwei gekrümmte Seitenwandungen 14, 15 unterteilt ist.

Der untere Teil der Rinne ist mit einer schräg von oben nach unten verlaufenden Abdeckung 17 (Figur 6) abgedeckt unter Belassung eines Spaltes 34 zum Herausfallen der vereinzelten Gegenstände des Schüttgutes über die Fallkante 33, wobei Figur 7 eine Draufsicht auf diesen Schlitz 34 und die Rinne 11 von vorn zeigt. Die Aussparung 16 dient zum Befüllen der Rinne 11. Ein Motor 12 ist innerhalb einer Schwenkhalterung 26 geeignet gehaltert, wobei der Motor 12 eine abgehende Motordrehachse 13 aufweist. Auf die Motordrehachse 13 ist eine scheibenförmige Halterung 35 montiert, die zentrisch in Verlängerung der Motordrehachse 13 eine Stange 18 aufweist, die somit ebenfalls in Richtung der Drehachse 30 der Rinne 11 verläuft. Vorzugsweise ist die Rinne 11 mittels ihres oberen Endes auf die scheibenförmige Halterung 35 aufgesteckt und mittels der Schrauben 28, 29 fest verschraubt.

Die Motordrehachse 13 kann mittels des Motors 12 in hin- und hergehende Drehbewegungen einer vorgegebenen Frequenz, die gering sein kann, versetzt werden, wobei die Drehbewegungen auf die Rinne 11 übertragen werden ; vorzugsweise wird ein Bewegungszyklus der Rinne 11, also eine volle Hin- und Herbewegung, in 0,5 bis 3 Sekunden ausgeführt. Deshalb führt die Rinne 11 hin- und hergehende Drehbewegungen um ihre Drehachse 30 aus. Der Motor 12 kann vorzugsweise als Schrittmotor ausgebildet sein, dessen Motordrehachse 13 eine Vielzahl von Schritten kleinen bis sehr kleinen Drehwinkels pro Schritt auszuführen imstande ist, wobei sich die Schritte der Rinne 11 als ein leichtes oder feines Rattern aufprägen, was in vorteilhafter Weise die Vereinzelung der Gegenstände des Schüttgutes zusätzlich unterstützt.

Auf der Stange 18 sind zwei kreisförmige Scheiben 19, 22 angeordnet, deren Durchmesser gleich oder

kleiner als der Innendurchmesser der Rinne 11 ist, wobei gegebenenfalls die Scheiben 19, 22 über den oberen Rand der Aussparung 16 hinausragen können, was aus Figur 5 ersichtlich ist. Beide Scheiben 19, 22 besitzen je einen peripheren Durchlaß 21, 24, der jeweils ungefähr im Bereich der tiefsten Stelle der Scheibe 19, 21 bzw. der Rinne 11 angeordnet ist. Die Durchlässe 21, 24 der beiden Scheiben können dergestalt gegeneinander angeordnet sein, daß sie in axialer Richtung eine Schikane bilden, d.h., daß in Projektion der beiden Scheiben aufeinander die beiden Durchlässe versetzt sind. Dadurch wird erreicht, daß bei Drehbewegung die einzelnen Gegenstände des Schüttgutes nur portionsweise die Scheiben passieren können, wodurch eine Vereinzelung schon vorbereitet wird.

Diese Gestaltung ermöglicht die Einfüllung einer großen Menge von Schüttgut in den Aufnahmeraum 20, wobei oberhalb des Aufnahmeraumes gegebenenfalls ein Trichter angeschlossen werden kann. Die Scheibe 19 bildet zusammen mit den zugehörigen Mantelwandungen 14, 15 der Rinne 11 einen Aufnahmeraum 20 für das Schüttgut. Die beiden Scheiben 19 und 22 zusammen mit den zugehörigen Mantelwandungen 14, 15 der Rinne 11 schließen einen weiteren Stauraum 23 ein, der schon zur Verdünnung des Schüttgutes dient. An die Scheibe 22 und deren Durchlaß 24 kann sich ein Vereinzelungsraum 25 der Länge 1 (Figur 5) anschließen, der von der Scheibe 22 bis zur unteren Fallkante 33 der Rinne 11 reicht.

Unterhalb der Fallkante 33 kann sich in bekannter Weise ein Förderband 27 befinden, auf welches die einzelnen Gegenstände des Schüttgutes vereinzelt auffallen. Das Abfallen der einzelnen Gegenstände kann in bekannter Weise mittels einer Registriereinrichtung überwacht und gemeldet werden.

Die Funktionsweise der Vorichtung ist folgende :

In den Aufnahmeraum 20 wird durch den Schlitz 16 der Rinne 11 Schüttgut aufgegeben. Wird nun die Rinne 11 mittels des Motors 12 um ihre Drehachse 30 hin- und hergedreht, so gelangen vereinzelte Gegenstände des Schüttgutes durch den ersten Durchlaß 21 innerhalb der Scheibe 19 in den Stauraum 23 hinein. Diese Vereinzelung wird durch das aufgeprägte leichte oder feine Rattern der Rinne 11 aufgrund der Verwendung eines Schrittmotors noch unterstützt. Von dort gelangen die Gegenstände wiederum vereinzelt durch den Durchlaß 24 der Scheibe 22 hindurch in den eigentlichen Vereinzelungsraum 25 auf die Vereinzelungsstrecke 1. Bei der hin- und hergehenden Drehbewegung, unterteilt in eine Vielzahl von Schritte, werden nun die einzelnen Gegenstände, wie in den Figuren 1 und 4 beschrieben, die schiefe Ebene der Rinne 11 abwärts bewegt und dabei gedrängelt und die Seitenwandungen 14, 15 hinauf- und hinabbewegt, so daß aufgrund der seitlichen Bewegungen, symbolisiert durch die Vektoren q, r, s, t und v in Figur 4, sich die Gegenstände völlig auseinanderdrängeln und vereinzeln und demgemäß einzeln über die Fallkante 33 der Rinne 11 nach unten auf das Förderband 27 fallen. Bevorzugt dauert ein voller Bewegungszyklus der Rinne — unterteilt in eine Vielzahl von Schritte — zwischen 0,5 bis 3 Sekunden.

Gewerbliche Anwendbarkeit :

Die Erfindung ist überall dort einsetzbar, wo relativ kleinvolumige Schüttgüter, insbesondere Pillen, Tabletten oder Zäpfchen, vereinzelt werden müssen, um eine abgezählte Anzahl derselben zu prüfen oder zu verpacken. Das ist insbesondere in der pharmazeutischen Industrie der Fall, wo Pillen, Tabletten oder Zäpfchen nach ihrer Herstellung auf eine Reihe von Kriterien untersucht werden müssen : So ist das Gewicht und die Druckfestigkeit von Tabletten oder Zäpfchen in der Herstellung laufend zu überwachen. Dazu werden aus der laufenden Herstellung nach statistischen Methoden eine bestimmte Anzahl aussortiert, die anschließend streng vereinzelt einer Prüfmaschine zugeführt werden. Die Erfindung ist insbesondere zur streng vereinzelten Zuführung derartiger Prüflinge für eine nachgeschaltete Prüfmaschine, wie Tabletten-Testmaschine, geeignet.

Liste der Bezugszeichen :

| | |
|---|---|
| 1 | Vereinzelungsvorrichtung |
| 2 | Rinne |
| 3 | Motor |
| 4 | Pillen |
| 5 | Bewegungsdoppelpfeil (Drehung) |
| 6 | Bewegungspfeil |
| 8 | Rinne |
| 9 | Rand |
| 10 | Drehachse |
| 11 | Rinne |

| 12 | Motor |
|---|---|
| 13 | Motordrehachse |
| 14, 15 | Seitenwandungen |
| 16 | Aussparung |
| 17 | Abdeckung |
| 18 | Stange |
| 19 | Scheibe |
| 20 | Aufnahmeraum |
| 21 | Durchlaß |
| 22 | Scheibe |
| 23 | Stauraum |
| 24 | Durchlaß |
| 25 | Vereinzelungsraum |
| 26 | Schwenkhalterung |
| 27 | Förderband |
| 28, 29 | Schrauben |
| 30 | Längs- und Drehachse |
| 33 | Fallkante |
| 34 | Ausfallschlitz |
| 35 | Halterung |

**Patentansprüche**

1. Rinne (2, 8, 11), die an ihrem oberen Ende um eine Achse und gemäß einer schiefen Ebene abwärts geneigt mit ihrer Fallkante (9, 33) hin- und herbewegbar gehaltert ist, zum Vereinzeln von Schüttgütern (4), wie Tabletten, Pillen, Zäpfchen oder Körnern, über die Fallkante (9, 33) der Rinne, dadurch gekennzeichnet, daß die Rinne (2, 8, 11) über eine längs einer Längsachse (30) der Rinne verlaufende Drehachse (10) an einem Motor (3, 12) befestigt ist und eine hin- und hergehende Bewegung um die Drehachse (10) auszuführen imstande ist.

2. Rinne nach Anspruch 1, dadurch gekennzeichnet, daß die Rinne (2, 11) mit ihrem oberen Ende an einer Motordrehachse (13) des Motors (3, 12) angeordnet ist, wobei die Drehachse (10, 30) der Rinne und die Motordrehachse zusammenfallen und ein Bewegungszyklus der Rinne vorzugsweise zwischen 0,5 bis 3 Sekunden dauert.

3. Rinne nach Anspruch 1 oder 2, dadurch gekennzeichnet, daß dieselbe einen ovalen Querschnitt mit gekrümmten Seitenwänden aufweist.

4. Rinne nach Anspruch 1 oder 2, dadurch gekennzeichnet, daß dieselbe ein Hohlzylinder (11) ist, der in seinem oberen Bereich eine Aussparung (16) zum Befüllen besitzt.

5. Rinne nach Anspruch 2 oder 4, dadurch gekennzeichnet, daß auf die Motordrehachse (13) eine scheibenförmige Halterung (35) montiert ist, auf die die Rinne (11) fest aufgesteckt ist und die Halterung zentrisch in Verlängerung der Drehachse eine Stange (18) aufweist, auf der im oberen Bereich der Rinne Scheiben (19, 22) mit je einem peripheren Durchlaß (21, 24) angeordnet sind, wobei die Scheiben innerhalb der Rinne Aufnahmeräume (20, 23) für das Schüttgut abgrenzen, an die sich abwärts ein Vereinzelungsraum (25) über die Länge (1) der Vereinzelungsstrecke der Rinne anschließt.

6. Rinne nach Anspruch 1, dadurch gekennzeichnet, daß dieselbe innen auf ihrer Gleitfläche mit einem antistatischen Mittel, beispielsweise Graphit, beschichtet ist.

7. Rinne nach Anspruch 1 oder 2, dadurch gekennzeichnet, daß der Motor (3, 12) ein Schrittmotor ist, der eine Vielzahl von Schritten innerhalb eines Bewegungszyklusses der Rinne (2, 8, 11) auszuführen imstande und die Rinne schrittweise hin- und herdrehbar ist unter Aufprägen eines feinen Ratterns.

8. Verfahren zum Vereinzeln von Schüttgütern (4), wie Tabletten, Pillen, Zäpfchen oder Körnern, die in eine Rinne (2, 8, 11) gefüllt sind, die an ihrem oberen Ende um eine Achse und gemäß einer schiefen Ebene abwärts geneigt gehalten ist und mit ihrer Fallkante (9, 33) hin- und herbewegt wird, wobei die Schüttgüter über die Fallkante (9, 33) der Rinne vereinzelt werden, dadurch gekennzeichnet, daß die Rinne (2, 8, 11) mittels eines Motors (3, 12) um eine Drehachse (10), die gleichzeitig eine Längsachse (30) der Rinne ist, hin- und hergedreht wird und das Schüttgut bei jeder hin- und hergehenden Bewegung mit seitlicher Auslenkung von der Längsachse (30) angehoben wird.

9. Verfahren nach Anspruch 8, dadurch gekennzeichnet, daß ein Bewegungszyklus der Rinne (2, 8, 11) vorzugsweise zwischen 0,5 bis 3 Sekunden dauert.

6

10. Verfahren nach Anspruch 8 oder 9, dadurch gekennzeichnet, daß der Motor (3, 12) ein Schrittmotor ist, der innerhalb eines Bewegungszyklusses der Rinne (2, 8, 11) eine Vielzahl von Schritten ausführt und die Rinne unter Aufprägens eines feinen Ratterns schrittweise hin- und herdreht.

## Claims

1. Trough (2, 8, 11) whose upper end is held around an axis in such a way that it can be moved back and forth along a slanted plane with its drop edge (9, 33) inclined downwards, for purposes of separating bulk goods (4) such as tablets, pills, suppositories or grains over the drop edge (9, 33) of the trough, characterized in that the trough (2, 8, 11) is attached to a motor (3, 12) via an axis of rotation (10) running parallel to the longitudinal axis (30) of the trough and in that it is capable of executing a back-and-forth movement around the axis of rotation (10).

2. Trough according to Claim 1, characterized in that the upper end of the trough (2, 11) is located on a motor rotation axis (13) of the motor (3, 12), whereby the axis of rotation (10, 30) of the trough and the motor rotation axis coincide and a movement cycle of the trough preferably takes between 0.5 and 3 seconds.

3. Trough according to Claim 1 or 2, characterized in that said trough has an oval cross section with curved side walls.

4. Trough according to Claim 1 or 2, characterized in that said trough is a hollow cylinder (11) whose upper area has a recess (16) which can be filled.

5. Trough according to Claim 2 or 4, characterized in that on the motor rotation axis (13), a disk-shaped holder (35) is mounted, onto which the trough (11) is firmly attached and the holder has a rod (18) positioned centrically as an extension of the axis of rotation, on which rod, in the upper area of the trough, there are disks (19, 11), each with a peripheral passage (21, 24), whereby the disks delimit receiving chambers (20, 23) for the bulk goods inside the trough, and these chambers are followed by a separation space (25) over the length (1) of the separation segment of the trough.

6. Trough according to Claim 1, characterized in that the sliding surfaces of said trough are coated with an antistatic agent, for example, graphite.

7. Trough according to Claim 1 or 2, characterized in that the motor (3, 12) is a stepping motor which is capable of carrying out a large number of steps within one movement cycle of the trough (2, 8, 11) and in that the trough can be turned back an forth while causing a fine vibration.

8. Process to separate bulk goods (4) such as tablets, pills, suppositories or grains which are filled in a trough (2, 8, 11) whose upper end in held around an axis and according to a slanted plane inclined downwards and is moved back and forth with its drop edge (9, 33), whereby the bulk goods are separated over the drop edge (9, 33) of the trough, characterized in that the trough (2, 8, 11) is turned back and forth by means of a motor (3, 12) around an axis of rotation (10) which is, at the same time, a longitudinal axis (30) of the trough, and the bulk goods are lifted during each back and forth movement with a sideward deflection of the longitudinal axis (30).

9. Process according to Claim 8, characterized in that a movement cycle of the trough (2, 8, 11) preferably takes between 0.5 and 3 seconds.

10. Process according to Claim 8 or 9, characterized in that the motor (3, 12) is a stepping motor which carries out, a large number of steps within one movement cycle of the trough (2, 8, 11), and the trough can be turned back and forth while causing a fine vibration.

## Revendications

1. Rigole (2, 8, 11) dont l'extrémité supérieure est fixée autour d'un axe dans un plan incliné vers le bas de sorte que son bord de chute (9, 33) puisse décrire des mouvements alternatifs pour séparer des produits en vrac (4) tels que des comprimés, des pilules, des suppositoires ou des grains sur le bord de chute (9, 33) de la rigole, caractérisée en ce que la rigole (2, 8, 11) est fixée à un moteur (3, 12) par l'intermédiaire d'un axe de rotation (10) s'étendant le long d'un axe longitudinal (30) de la rigole et qu'elle est en mesure d'effectuer un mouvement de va-et-vient autour de l'axe de rotation.

2. Rigole selon la revendication 1, caractérisée en ce que l'extrémité supérieure de la rigole (2, 11) est disposée sur un axe de rotation moteur (13) du moteur (3, 12), que l'axe de rotation (10, 30) de la rigole et l'axe de rotation moteur coïncident et que la durée d'un cycle de mouvement de la rigole est comprise de préférence entre 0,5 et 3 secondes.

3. Rigole selon l'une quelconque des revendications 1 ou 2, caractérisée en ce que celle-ci présente une section ovale avec des parois latérales courbées.

4. Rigole selon l'une quelconque des revendications 1 ou 2, caractérisée en ce que celle-ci est un cylindre creux (11) dont la partie supérieure présente un orifice (16) pour le remplissage.

5. Rigole selon l'une quelconque des revendications 2 ou 4, caractérisée en ce qu'une fixation (35) en forme de disque est montée sur l'axe de rotation moteur (13), sur laquelle la rigole (11) est fixée solidement et que ladite fixation présente au centre, en prolongement de l'axe de rotation, une tige (18) sur laquelle, dans la zone supérieure de la rigole, sont disposés des disques (19, 22) dont chacun est doté d'un passage périphérique (21, 24), ces disques délimitant à l'intérieur de la rigole des chambres de réception (20, 23) des produits en vrac, et qui, en aval, sont suivies d'une chambre de séparation (25) s'étendant sur la longueur (1) du parcours de séparation de la rigole.

6. Rigole selon la revendication 1, caractérisée en ce que la surface de glissement intérieure de celle-ci est enduite d'un produit antistatique, par exemple de graphite.

7. Rigole selon l'une quelconque des revendications 1 ou 2, caractérisée en ce que le moteur (3, 12) est un moteur pas à pas pouvant effectuer une multiplicité de pas au cours d'un cycle de mouvement de la rigole (2, 8, 11) et que la rigole peut effectuer un mouvement de va-et-vient pas à pas en imposant un léger broutage.

8. Procédé pour séparer des produits en vrac (4) tels que des comprimés, des pilules, des suppositoires ou des grains, remplis dans une rigole (2, 8, 11) dont l'extrémité supérieure est fixée autour d'un axe dans un plan incliné vers le bas, ladite rigole avec son bord de chute (9, 33) décrivant un mouvement de va-et-vient séparant ainsi les produits en vrac sur le bord de chute (9, 33) de la rigole, caractérisé en ce que la rigole (2, 8, 11) est mue selon un mouvement de va-et-vient par un moteur (3, 12) autour d'un axe de rotation (10) faisant en même temps office d'axe longitudinal (30) de la rigole et que, à chaque mouvement de va-et-vient, les produits en vrac sont soulevés de l'axe longitudinale (30) avec excursion latérale.

9. Procédé selon la revendication 8, caractérisé en ce que la durée d'un cycle de mouvement de la rigole (2, 8, 11) est comprise de préférence entre 0,5 et 3 secondes.

10. Procédé selon l'une quelconque des revendications 8 ou 9, caractérisé en ce que le moteur (3, 12) est un moteur pas à pas qui, au cours d'un cycle de mouvement de la rigole (2, 8, 11), effectue une multiplicité de pas et fait pivoter la rigole pas à pas dans un mouvement de va-et-vient en imposant un léger broutage.

Fig. 1.

Fig. 2

Fig. 3

Fig. 4

Fig. 7

EP 0 379 481 B1

Fig. 5

Fig. 6